(19) Europäisches Patentamt / European Patent Office / Office européen des brevets

(11) **EP 3 836 071 B1**

(12) **EUROPEAN PATENT SPECIFICATION**

(45) Date of publication and mention
of the grant of the patent:
**12.03.2025  Bulletin 2025/11**

(21) Application number: **19846694.8**

(22) Date of filing: **02.08.2019**

(51) International Patent Classification (IPC):
*G06T 3/40* (2024.01)          *G06T 3/00* (2024.01)
*G03B 37/04* (2021.01)         *H04N 23/698* (2023.01)

(52) Cooperative Patent Classification (CPC):
**G06T 3/4038; G03B 37/04; G06T 5/40; G06T 5/50;
G06T 5/92; H04N 23/698;** G06T 2207/20221

(86) International application number:
**PCT/CN2019/099018**

(87) International publication number:
**WO 2020/029877 (13.02.2020 Gazette 2020/07)**

(54) **BRIGHTNESS ADJUSTMENT METHOD FOR MULTI-CAMERA MOSAICKING, AND PORTABLE TERMINAL**

HELLIGKEITSANPASSUNGSVERFAHREN FÜR MULTIKAMERA-MOSAIKBILDUNG UND TRAGBARES ENDGERÄT

PROCÉDÉ DE RÉGLAGE DE LUMINOSITÉ DESTINÉ À UN MOSAÏQUAGE DE CAMÉRAS MULTIPLES ET TERMINAL PORTATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2018  CN 201810906060**

(43) Date of publication of application:
**16.06.2021  Bulletin 2021/24**

(73) Proprietor: **Arashi Vision Inc.
Bao'an District
Shenzhen
Guangdong 518000 (CN)**

(72) Inventor: **XIE, Liang
Shenzhen, Guangdong 518000 (CN)**

(74) Representative: **Michalski Hüttermann & Partner
Patentanwälte mbB
Kaistraße 16A
40221 Düsseldorf (DE)**

(56) References cited:
CN-A- 105 321 151          CN-A- 107 369 129
CN-A- 109 166 076          US-A1- 2004 228 544
US-A1- 2018 035 047        US-A1- 2018 082 454
US-A1- 2018 082 454

**Description**

**FIELD OF THE INVENTION**

The present invention relates to the field of imaging processing, and especially relates to a brightness adjustment method for multi-camera mosaicing and a portable terminal.

**BACKGROUND OF THE INVENTION**

With the development of computer technology and image processing technology, multi-camera image stitching technology has been more and more widely used, such as virtual reality and panoramic images. When acquiring a panoramic image, the multi-camera image stitching technology generally requires cameras to shoot from different angles at the same time, and there must be overlapping regions between adjacent photos, through locus of control with the same name in the overlapping region, the image matching method is used to calculate an image transformation matrix, so as to merge the overlapping photos into a panoramic image.

In multi-camera panoramic mosaicing, the brightness of the scene in the field of view of each camera is not consistent. In order to shoot more details, each camera needs to be exposed independently. But after independent exposure, there is a big brightness difference in the overlapping region images of two adjacent cameras. If these images are directly stitched, the stitched panoramic image will have a seam line with obvious brightness difference in the image overlapping regions, which will affect the visual and aesthetic effects of the panoramic image.

Some existing methods use the average color of the color channels in the common regions to linearly adjust multiple images when removing the brightness difference in image mosaicking. For example, the Chinese patent No. CN 102542548B discloses a method and a device for color correction in images, in this method, a linear relationship between the color channels of the images is determined according to the average color of the color channels in the common regions of the two acquired images, and then, the color values of the color channels for pixels in the two images are corrected according to the linear relationship. The above-mentioned method has poor effect in processing images with large brightness differences, and will cause great changes to pixels in the image that are not in the common region, which affects the visual effect.

The document US2004/228544A1 discloses an image processing method and apparatus for generating a panoramic image in which the hue or brightness discontinuities generated at the seams of source images are reduced.

The document US2018/082454A1 discloses after content capture by cameras of a multi-camera system, post processing techniques compensate for a mismatch between cameras of the multi-camera system.

**SUMMARY OF THE INVENTION**

The invention is set out in the appended set of claims.

**Technical Problems**

The present invention provides a brightness adjustment method for multi-camera mosaicing, a computer-readable storage medium and a portable terminal, which aims to eliminate the brightness difference in image overlapping regions, while keep the details in the bright and dark parts in the images unchanged, and better improve the panoramic image visual effects.

**Technical solution**

In the first aspect, the present invention provides a brightness adjustment method for multi-camera mosaicing, the method comprising steps of:

acquiring six original images respectively photographed by six cameras and expanding same into latitude and longitude images to acquire corresponding six groups of overlapping region images;
mapping the original image photographed by each camera with a brightness mapping function, and calculating a sum of the brightness differences of the six groups of overlapping region images as a total brightness error;
adjusting the brightness mapping function of each camera respectively to minimize the total brightness error to obtain an optimal brightness mapping function;
keeping the brightest image in a dark part of each original image unchanged, adjusting the optimal brightness mapping function according to a brightness mapping function of the brightest image in the dark part to obtain an adjusted brightness mapping function of each camera, mapping all original images with the adjusted brightness mapping function to obtain adjusted images for panoramic mosaicing to generate a dark panoramic mosaic image; and keeping the darkest image in a bright part of each original image unchanged, adjusting the optimal brightness mapping function according to a brightness mapping function of the darkest image in the bright part to obtain an adjusted brightness mapping function of each camera, mapping all original images with the adjusted brightness mapping function to obtain adjusted images for panoramic mosaicing to generate a bright panoramic mosaic image; and

fusing the dark panoramic mosaic image and the bright panoramic mosaic image to generate a panoramic mosaic image.

Further, the six groups of overlapping region images comprises six original images photographed simultaneously with independent exposures by a six-eye panoramic camera, the six original images are six fisheye images; the six fisheye images are expanded into latitude and longitude images which form the six groups of overlapping region images therebetween; and the six groups of overlapping region images are marked as sl[i] and rl[i], *i*=1~6, where sl[i] and rl[i] are a pair of overlapping region images, sl[i] is photographed by the *i* camera, when i=1~5, rl[i] is photographed by the *i+1* camera, when *i*=6, rl[6] is photographed by the first camera.

Further, the brightness mapping function is:

$$f(x) = \begin{cases} kx & x < 128 \\ ax^b + c & x \geq 128 \end{cases} \qquad (1)$$

where in formula (1), a, b, c satisfy:

$$f(128) = 128k \qquad (2)$$

$$f'(128) = k \qquad (3)$$

$$f(255) = 255 \qquad (4)$$

in the above formula (2), formula (3) and formula (4), *k* is an initial value, the initial value can be set to 1, and *x* is a pixel value, $x \in [0,255]$, so as to determine the complete brightness mapping function.

Further, the step of calculating a sum of the brightness differences of the six groups of overlapping region images as a total brightness error, specifically comprises:

calculating brightness histograms sH[i] and rH[i] of every two overlapping region images sl[i] and rl[i];
calculating cumulative histograms sS[i] and rS[i] of every two overlapping region images;
aligning sS[i] to rS[i] to obtain the brightness mapping function sMap[i] by histogram specification; otherwise, aligning rS[i] to sS[i] to obtain the brightness mapping function rMap[i]; and
calculating a sum of the brightness differences of the six groups of overlapping region images as a total brightness error by formula (5):

$$r_i = \sum_{v=0}^{255} |f_i(v) - f_{i+1}(v_2)| \times sH_i(v) + |f_i(v_3) - f_{i+1}(v)| \times rH_i(v) \qquad (5)$$

where in formula (5): $v_2$ = sMap[v], $v_3$ = rMap[v], and a total brightness error of the six cameras is:

$$r = \sum_{i=1}^{6} r_i$$

.

Further, a calculation method of the optimal brightness mapping function is:

adjusting the *k* value of the brightness mapping function, calculating the *a, b, c* values; setting the *k* value of the six cameras to be initialized to 1, optimizing the *k* value of each camera by the LM algorithm under $k_1 k_2 k_3 k_4 k_5 k_6$=1, and minimizing the total brightness error *r*. When *r* is the minimum, the six cameras have six *k* values, the *a, b, c* values corresponding to each camera can be calculated according to the *k* value at this time, and at this time, the brightness mapping function for each camera is the optimal brightness mapping function.

Further, the dark panoramic mosaic image is the panoramic image with a dark part being the brightest, a method for obtaining comprises:

keeping the brightest image in the dark part of each original image unchanged, finding a brightness mapping function $f_h$ of the brightest image in the dark part, calculating its inverse function $f_h^{-1}$, adjusting the optimal brightness mapping function with a first adjustment function, where the first adjustment function is:

$$f_i^{(1)}(x) = f_h^{-1}[f_i(x)] \qquad (6)$$

in formula (6), $f_i^{(1)}(x)$ is the adjusted brightness mapping function of the $i$ camera, and $f_i(x)$ is the optimal brightness mapping function of the $i$ camera.

Further, the bright panoramic mosaic image is the panoramic image with a bright part being the darkest, a method for obtaining comprises:

keeping the darkest image in the bright part being of each original image unchanged, finding a brightness mapping function $f_l$ of the darkest image in the bright part, calculating its inverse function $f_l^{-1}$, adjusting the optimal brightness mapping function with a second adjustment function, where the second adjustment function is:

$$f_i^{(2)}(x) = f_l^{-1}[f_i(x)] \qquad (7)$$

in formula (7), $f_i^{(2)}(x)$ is the adjusted brightness mapping function of the $i$ camera, and $f_i(x)$ is the optimal brightness mapping function of the $i$ camera.

Further, the step of fusing the dark panoramic mosaic image and the bright panoramic mosaic image to generate the final output panoramic mosaic image, specifically is that:

in the dark panoramic mosaic image, setting the weight $W$ at the center meridian of the brightest original image to 1, setting the weight $W$ at the center meridian of the darkest original image to 0, and performing linear transition to other regions; so as to generate a weight map $W_1$, subtracting the value of each point in $W_1$ with 1 to generate a weight map $W_2$; and generating a panoramic mosaic image by the formula:

$$I = W_1 I_1 + W_2 I_2 \qquad (8)$$

where in formula (8), $I$ is the finally generated panoramic mosaic image, $I_1$ is the dark panoramic mosaic image, and $I_2$ is the bright panoramic mosaic image.

In a second aspect, the present invention provides a computer-readable storage medium that, where one or more computer programs are executed by one or more processors, implement the steps of the above-mentioned brightness adjustment method for multi-camera mosaicing.

In a third aspect, the present invention provides a portable terminal, comprising:

one or more processors;
a memory; and
one or more computer programs, wherein the one or more computer programs are stored in the memory and are configured to be executed by the one or more processors, and when the one or more computer programs are executed by the one or more processors, implements the steps of the above-mentioned brightness adjustment method for multi-camera mosaicing.

**Advantages**

By means of adjusting a brightness mapping function for a camera with independent exposure, the brightness difference in the overlapping region images is eliminated, while the details in bright and dark parts in the image can be kept unchanged, and the visual effect of the panoramic image is better improved.

$$r_i = \sum_{v=0}^{255} \left| f_i(v) - f_{i+1}(v_2) \right| \times sH_i(v) + \left| f_i(v_3) - f_{i+1}(v) \right| \times rH_i(v) \qquad (5)$$

,

in formula (5): $v_2 = sMap[v]$, $v_3 = rMap[v]$, and a total brightness error of the six cameras is: $r = \sum_{i=1}^{6} r_i$ .

S103, adjusting the brightness mapping function of each camera respectively to minimize the total brightness error to obtain an optimal brightness mapping function;

specifically, adjusting the brightness mapping function of each camera respectively is adjusting the **k** value of the brightness mapping function of each camera, and calculating the **a, b, c** values; initializing the **k** value of the six cameras to 1, optimizing the **k** value of each camera by the LM (Levenberg-Marquardt) algorithm under $k_1 k_2 k_3 k_4 k_5 k_6 = 1$, and minimizing the total brightness error $r$; when $r$ is the minimum, the six cameras have six **k** values, the **a, b, c** values corresponding to each camera can be calculated according to the **k** value at this time, and at this time, the brightness mapping function for each camera is the optimal brightness mapping function;

it should also be noted that the LM algorithm is a combination of the gradient descent method and the Gauss-Newton method; the LM algorithm adds the factor $\mu$ to the Gauss-Newton method, when $\mu$ is large, it is equivalent to the gradient descent method, and when $\mu$ is small, it is equivalent to the Gauss-Newton method; when using the LM algorithm, first set a relatively small $\mu$ value; when the objective function increases instead, increase $\mu$ and use the gradient descent method to quickly search, and then reduce $\mu$ and use the Newton method to search.

S104, keeping the brightest image in a dark part of each original image unchanged, adjusting the optimal brightness mapping function and mapping all the original images for panoramic mosaicing to generate a dark panoramic mosaic image, and keeping the darkest image in a bright part of each original image unchanged, adjusting the optimal brightness mapping function and mapping all the original images for panoramic mosaicing to generate a bright panoramic mosaic image;

keeping the brightest image in a dark part of each original image unchanged, finding a brightness mapping function $f_h$ of the brightest image in the dark part, calculating its inverse function $f_h^{-1}$, adjusting the optimal brightness mapping function with a first adjustment function, where the first adjustment function is:

$$f_i^{(1)}(x) = f_h^{-1}[f_i(x)] \qquad (6)$$

in formula (6), $f_i^{(1)}(x)$ is the adjusted brightness mapping function of the **i** camera, and $f_i(x)$ is the optimal brightness mapping function of the **i** camera calculated in step S103.

Keeping the darkest image in a bright part of each original image unchanged, finding a brightness mapping function $f_l$ of the darkest image in the bright part, calculating its inverse function $f_l^{-1}$, adjusting the optimal brightness mapping function with a second adjustment function, where the second adjustment function is:

$$f_i^{(2)}(x) = f_l^{-1}[f_i(x)] \qquad (7)$$

in formula (7), $f_i^{(2)}(x)$ is the adjusted brightness mapping function of the **i** camera, and $f_i(x)$ is the optimal brightness mapping function of the **i** camera calculated in step S103.

S105, fusing the dark panoramic mosaic image and the bright panoramic mosaic image to generate a panoramic mosaic image;

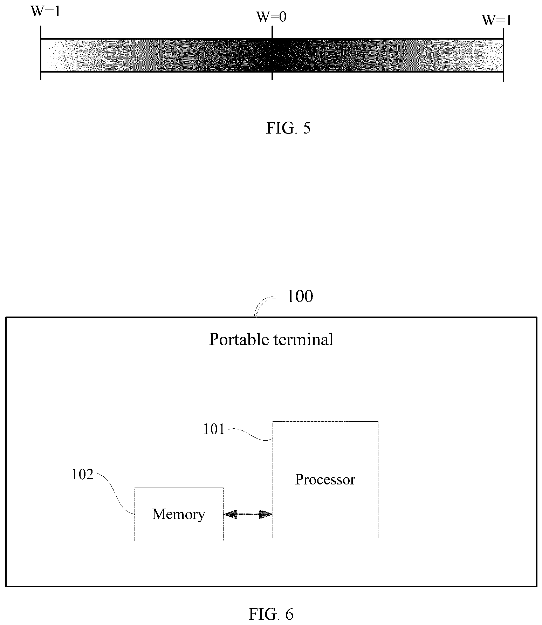

referring to FIG.5, in the dark panoramic mosaic image, setting the weight **W** at the center meridian of the brightest original image to 1, setting the weight **W** at the center meridian of the darkest original image to 0, and performing linear transition to other regions; so as to generate a weight map $W_1$, subtracting the value of each point in $W_1$ with 1 to

generate a weight map $W_2$; and the S105 specifically is:

$$I = W_1 I_1 + W_2 I_2 \qquad (8)$$

in formula (8), $I$ is the finally generated panoramic mosaic image, $I_1$ is the dark panoramic mosaic image, and $I_2$ is the bright panoramic mosaic image.

**Second embodiment**

The second embodiment of the present invention provides a computer-readable storage medium, of which when one or more computer programs are executed by one or more processors, implements the steps of the brightness adjustment method for multi-camera mosaicing provided in the first embodiment of the present invention.
The computer-readable storage medium may be a non-transitory computer-readable storage medium.

**Third embodiment**

FIG. 6 illustrates a specific structural block diagram of a portable terminal provided in the third embodiment of the present invention, a portable terminal 100 comprises: one or more processors 101, a memory 102, and one or more computer programs; where the one or more processors 101 and the memory 102 are connected by a bus; the one or more computer programs are stored in the memory 102 and are configured to be executed by the one or more processors 101, and when the one or more computer programs are executed by the one or more processors 101, implements the steps of the brightness adjustment method for multi-camera mosaicing provided in the first embodiment of the present invention.
In this present invention, by means of adjusting a brightness mapping function for a camera with independent exposure, a brightness difference in the overlapping region images is eliminated, while the details in bright and dark parts in an image can be kept unchanged, and the visual effect of the panoramic image is better improved.
In the embodiments of the present invention, those of ordinary skill in the art can understand that all or part of the steps in the methods of the above-mentioned embodiments can be completed by programs to instruct related hardware, and the programs can be stored in a computer readable storage medium, such as ROM/RAM, magnetic disk, optical disk, etc.

**Claims**

1.   A brightness adjustment method for multi-camera mosaicing, which comprises steps of:

acquiring six original images respectively photographed by six cameras and expanding the six original images into latitude and longitude images to acquire corresponding six groups of overlapping region images thereof wherein the six groups of overlapping region images are pairs of overlapping region images marked as sl[i] and rl[i], i=1-6, where sl[i] and rl[i] are a pair of overlapping region images, sl[i] is photographed by the i camera, when i=1~5, rl[i] is photographed by the i+1 camera, when i=6, rl[6] is photographed by the first camera;
**characterized in that** the method further comprises the steps of
mapping the original image photographed by each camera with a respective brightness mapping function, and calculating a sum of the brightness differences of the six groups of overlapping region images as a total brightness error;
adjusting the brightness mapping function of each camera respectively to minimize the total brightness error to obtain an optimal brightness mapping function for each camera;
keeping an image with a dark part being the brightest in the original images unchanged, finding the brightness mapping function of the image with a dark part being the brightest, calculating its inverse function to provide a first adjustment function, adjusting the optimal brightness mapping function for each camera with the first adjustment function and mapping all the original images for panoramic mosaicing to generate a dark panoramic mosaic image, and
keeping an image with a bright part being the darkest in the original images unchanged, finding the brightness mapping function of the image with a bright part being the darkest, calculating its inverse function to provide a second adjustment function, adjusting the optimal brightness mapping function for each camera with the second adjustment function and mapping all the original images for panoramic mosaicing to generate a bright panoramic mosaic image; and
fusing the dark panoramic mosaic image and the bright panoramic mosaic image to generate a panoramic mosaic image.

2. The method of claim **1, characterised in that** the brightness mapping function is:

$$f(x) = \begin{cases} kx & x < 128 \\ ax^b + c & x \geq 128 \end{cases} \qquad (1)$$

in formula (1), a, b, c satisfy:

$$f(128) = 128k \qquad (2)$$

$$f'(128) = k \qquad (3)$$

$$f(255) = 255 \qquad (4)$$

in the above formula (2), and formula (3), $k$ is an initial value, the initial value is set to 1, and $x$ is a pixel value, $x \in [0,255]$, so as to determine the complete brightness mapping function.

3. The method of claim **2, characterised in that** the step of calculating a sum of the brightness differences of the six groups of overlapping region images as a total brightness error, specifically comprises:

calculating brightness histograms sH[i] and rH[i] of every two overlapping region images sI[i] and rI[i];
calculating cumulative histograms sS[i] and rS[i] of every two overlapping region images;
aligning sS[i] to rS[i] to obtain the brightness mapping function sMap[i] by histogram specification; otherwise, aligning rS[i] to sS[i] to obtain the brightness mapping function rMap[i]; and
calculating a sum of the brightness differences of the six groups of overlapping region images as a total brightness error by formula (5):

$$r_i = \sum_{v=0}^{255} |f_i(v) - f_{i+1}(v_2)| \times sH_i(v) + |f_i(v_3) - f_{i+1}(v)| \times rH_i(v) \qquad (5)$$

where in formula (5): $v_2 = sMap[v]$, $v_3 = rMap[v]$, and a total brightness error of the six cameras is: $r = \sum_{i=1}^{6} r_i$ .

4. The method of claim **2, characterised in that** a calculation method of the optimal brightness mapping function is: adjusting the $k$ value of the brightness mapping function, calculating the $a$, $b$, $c$ values; setting the $k$ value of the six cameras to be initialized to 1, optimizing the $k$ value of each camera by the LM algorithm under $k_1 k_2 k_3 k_4 k_5 k_6 = 1$, and minimizing the total brightness error $r$; when $r$ is the minimum, the six cameras have six $k$ values, the $a$, $b$, $c$ values corresponding to each camera is calculated according to the $k$ value at this time, and at this time, the brightness mapping function for each camera is the optimal brightness mapping function.

5. The method of claim **4, characterised in that** the dark panoramic mosaic image is the panoramic image with a dark part being the brightest, a method for obtaining comprises:

keeping an image with a dark part being the brightest in the original images unchanged, finding the brightness mapping function $f_h$ of the image with a dark part being the brightest, calculating its inverse function $f_h^{-1}$ thereof, and adjusting the optimal brightness mapping function with the first adjustment function; where the first adjustment function is:

$$f_i^{(1)}(x) = f_h^{-1}[f_i(x)] \qquad (6)$$

in formula (6), $f_i^{(1)}(x)$ is the adjusted brightness mapping function of the *i* camera, and $f_i(x)$ is the optimal brightness mapping function of the *i* camera.

**6.** The method of claim **4, characterised in that** the bright panoramic mosaic image is the panoramic image with a bright part being the darkest, a method for obtaining comprises:

keeping an image with a bright part being the darkest in the original images unchanged, finding the brightness mapping function $f_i$ of the image with a bright part being the darkest, calculating its inverse function $f_i^{-1}$ thereof, and adjusting the optimal brightness mapping function with the second adjustment function; where the second adjustment function is:

$$f_i^{(2)}(x) = f_i^{-1}[f_i(x)] \qquad (7)$$

in formula (7), is the adjusted brightness mapping function of the *i* camera, and $f_i(x)$ is the optimal brightness mapping function of the *i* camera.

**7.** The method of claim **1, characterised in that** the step of fusing the dark panoramic mosaic image and the bright panoramic mosaic image to generate the final output panoramic mosaic image, specifically is that:

in the dark panoramic mosaic image, setting the weight *W* at the center meridian of the brightest original image to 1, setting the weight *W* at the center meridian of the darkest original image to 0, and performing linear transition to other regions; so as to generate a weight map $W_1$, subtracting the value of each point in $W_1$ with 1 to generate a weight map $W_2$; and generating a panoramic mosaic image by the formula:

$$I = W_1 I_1 + W_2 I_2 \qquad (8)$$

where in formula (8), *I* is the finally generated panoramic mosaic image, $I_1$ is the dark panoramic mosaic image, and $I_2$ is the bright panoramic mosaic image.

**8.** A computer-readable storage medium that stores one or more programs thereon, **characterised in that** the one or more computer programs are executed by one or more processors to implement the steps of the brightness adjustment method for multi-camera mosaicing of any one of claims **1** to **7**.

**9.** An portable terminal (100), comprising:

one or more processors (101);
a memory (102); and
one or more computer programs that are stored in the memory (102) and are configured to be executed by the one or more processors (101), **characterised in that** the one or more computer programs are executed by one or more processors to implement the steps of the brightness adjustment method for multi-camera mosaicing of any one of claims **1** to **7.**

**Patentansprüche**

**1.** Verfahren zur Anpassung der Helligkeit für die Bildung eines Mosaiks mit mehreren Kameras, wobei das Verfahren die folgenden Schritte aufweist:

Erfassen von sechs Originalbildern, die jeweils von sechs Kameras fotografiert wurden, und Erweitern der sechs Originalbilder in Breiten- und Längengradbilder, um entsprechende sechs Gruppen von Bildern von überlappenden Regionen davon zu erfassen, wobei die sechs Gruppen von Bildern von überlappenden Regionen Paare von Bildern von überlappenden Regionen sind, die als sl[i] und rl[i] markiert sind, i=1-6, wobei sl[ i] und rl[i] ein Paar sich überlappender Bilder einer Region sind, sl[i] von der Kamera i fotografiert wird, wenn i=1~5, rl[i] von der Kamera i+1 fotografiert wird, wenn i=6, rl[6] von der ersten Kamera fotografiert wird; **dadurch gekennzeichnet, dass** das Verfahren ferner die folgenden Schritte aufweist:

Abbilden bzw. Mappen des von jeder Kamera fotografierten Originalbildes mit einer entsprechenden Helligkeitsabbildungsfunktion bzw. -mappingfunktion und Berechnen einer Summe der Helligkeitsunterschiede der sechs Gruppen von Bildern überlappender Regionen als Gesamt-Helligkeitsfehler;

Anpassen der Helligkeitsabbildungsfunktion jeder Kamera, um den Gesamt-Helligkeitsfehler zu minimieren und eine optimale Helligkeitsabbildungsfunktion für jede Kamera zu erfassen;

unverändertes Beibehalten eines Bildes, bei dem ein dunkler Teil der hellste in den Originalbildern ist, Finden der Helligkeitsabbildungsfunktion des Bildes, bei dem ein dunkler Teil der hellste ist, Berechnen seiner Umkehrfunktion zum Bereitstellen einer ersten Anpassungsfunktion, Anpassen der optimalen Helligkeitsabbildungsfunktion für jede Kamera mit der ersten Anpassungsfunktion und Abbilden aller Originalbilder für die Bildung eines Mosaiks zum Erzeugen eines dunklen Panorama-Mosaikbildes und

unverändertes Beibehalten eines Bildes, bei dem ein heller Teil der dunkelste in den Originalbildern ist, Finden der Helligkeitsabbildungsfunktion des Bildes, bei dem ein heller Teil der dunkelste ist, Berechnen seiner Umkehrfunktion, zum Bereitstellen einer zweiten Anpassungsfunktion, Anpassen der optimalen Helligkeitsabbildungsfunktion für jede Kamera mit der zweiten Anpassungsfunktion und Abbilden aller Originalbilder für die Bildung eines Mosaiks zum Erzeugen eines hellen Panorama-Mosaikbildes; und

Verschmelzen des dunklen Panorama-Mosaikbildes und des hellen Panorama-Mosaikbildes zum Erzeugen eines Panorama-Mosaikbildes.

2. Verfahren nach Anspruch **1, dadurch gekennzeichnet, dass** die Helligkeitsabbildungsfunktion ist:

$$f(x) = \begin{cases} kx & x < 128 \\ ax^b + c & x \geq 128 \end{cases} \qquad (1)$$

in Formel (1) erfüllen a, b, c:

$$f(128) = 128k \qquad (2)$$

$$f'(128) = k \qquad (3)$$

$$f(255) = 255 \qquad (4)$$

In der obigen Formel (2) und Formel (3) ist $k$ ein Anfangswert, der Anfangswert ist auf 1 eingestellt und $x$ ist ein Pixelwert, $x \in [0, 255]$, um die vollständige Helligkeitsabbildungsfunktion zu bestimmen.

3. Verfahren nach Anspruch **2, dadurch gekennzeichnet, dass** die Schritte des Berechnens einer Summe der Helligkeitsunterschiede der sechs Gruppen von Bildern überlappender Regionen als Gesamthelligkeitsfehler, speziell aufweist:

Berechnen von Helligkeitshistogrammen sH[i] und rH[i] von jeweils zwei Bildern überlappender Regionen sl[i] und rl[i];

Berechnen von kumulativen Histogrammen sS[i] und rS[i] von jeweils zwei Bildern überlappender Regionen;

Ausrichten von sS[i] und rS[i], um die Helligkeitsabbildungsfunktion sMap[i] durch Histogrammspezifikation zu erfassen; andernfalls Ausrichten von rS[i] und sS[i], um die Helligkeitsabbildungsfunktion rMap[i] zu erfassen; und

Berechnen einer Summe der Helligkeitsunterschiede der sechs Gruppen überlappender Bilder von Regionen als Gesamt-Helligkeitsfehler durch Formel (5):

$$r_i = \sum_{v=0}^{255} |f_i(v) - f_{i+1}(v_2)| \times sH_i(v) + |f_i(v_3) - f_{i+1}(v)| \times rH_i(v) \qquad (5)$$

wobei in Formel (5): $v_2 = sMap[v]$, $v_3 = rMap[v]$, und ein Gesamt-Helligkeitsfehler der sechs Kameras beträgt:

$$r = \sum_{i=1}^{6} r_i$$

.

4. Verfahren nach Anspruch **2, dadurch gekennzeichnet, dass** ein Verfahren zum Berechnen der optimalen Helligkeitsabbildungsfunktion ist:
Anpassen des **k**-Werts der Helligkeitsabbildungsfunktion, Berechnen der **a-, b-, c**-Werte; Einstellen des **k**-Werts der sechs zu initialisierenden Kameras auf 1, Optimieren des **k**-Werts jeder Kamera durch den LM-Algorithmus unter $k_1 k_2 k_3 k_4 k_5 k_6 = 1$ und Minimierung des Gesamt-Helligkeitsfehlers **r**; wenn **r** das Minimum ist, haben die sechs Kameras sechs **k**-Werte, die **a-, b-, c**-Werte, die jeder Kamera entsprechen, werden gemäß dem **k**-Werts zu diesem Zeitpunkt berechnet, und zu diesem Zeitpunkt ist die Helligkeitsabbildungsfunktion für jede Kamera die optimale Helligkeitsabbildungsfunktion.

5. Verfahren nach Anspruch **4, dadurch gekennzeichnet, dass** das dunkle Panorama-Mosaikbild das Panoramabild ist, bei dem ein dunkler Teil der hellste ist, wobei das Verfahren zum Erfassen folgende Schritte aufweist:

unverändertes Beibehalten eines Bildes, bei dem ein dunkler Teil der hellste in den Originalbildern ist, Finden der Helligkeitsabbildungsfunktion $f_h$ des Bildes, bei dem ein dunkler Teil der hellste ist, Berechnen seiner Umkehrfunktion $f_h^{-1}$, und Anpassen der optimalen Helligkeitsabbildungsfunktion mit der ersten Anpassungsfunktion; wobei die erste Anpassungsfunktion ist:

$$f_i^{(1)}(x) = f_h^{-1}[f_i(x)] \qquad (6)$$

in Formel (6), $f_i^{(1)}(x)$ ist die angepasste Helligkeitsabbildungsfunktion der Kamera **i** und $f_i(x)$ ist die optimale Helligkeitsabbildungsfunktion der Kamera **i**.

6. Verfahren nach Anspruch **4, dadurch gekennzeichnet, dass** das helle Panorama-Mosaikbild das Panoramabild ist, bei dem ein heller Teil der dunkelste ist, wobei das Verfahren zum Erfassen folgende Schritte aufweist:

unverändertes Beibehalten eines Bildes, bei dem ein heller Teil der dunkelste in den Originalbildern ist, Finden der Helligkeitsabbildungsfunktion $f_l$ des Bildes, bei dem ein heller Teil der dunkelste ist, Berechnen seiner Umkehrfunktion $f_l^{-1}$, und Anpassen der optimalen Helligkeitsabbildungsfunktion mit der zweiten Anpassungsfunktion; wobei die zweite Anpassungsfunktion ist:

$$f_i^{(2)}(x) = f_l^{-1}[f_i(x)] \qquad (7)$$

in Formel (7), $f_i^{(2)}(x)$ ist die angepasste Helligkeitsabbildungsfunktion der Kamera **i** und $f_i(x)$ ist die optimale Helligkeitsabbildungsfunktion der Kamera **i**.

7. Verfahren nach Anspruch 1, **dadurch gekennzeichnet, dass** die Schritte des Verschmelzens des dunklen Panorama-Mosaikbildes und des hellen Panorama-Mosaikbildes zum Erzeugen des endgültigen Panorama-Mosaikbildes für die Ausgabe speziell darin bestehen, dass

in dem dunklen Panorama-Mosaikbild, Setzen des Gewichts bzw. der Gewichtung **W** am Mittelmeridian des hellsten Originalbildes auf 1, Setzen des Gewichts **W** am Mittelmeridian des dunkelsten Originalbildes auf 0 und lineares Übergehen zu anderen Bereichen; zum Erzeugen einer Gewichtskarte $W_1$, Subtrahieren des Wertes jedes Punktes in $W_1$ mit 1 zum Erzeugen einer Gewichtskarte $W_1$; und Erzeugen eines Panorama-Mosaikbildes durch die Formel:

$$I = W_1 I_1 + W_2 I_2 \qquad (8)$$

wobei in Formel (8) **I** das endgültig erzeugte Panorama-Mosaikbild, $I_1$ das dunkle Panorama-Mosaikbild und $I_2$ das helle Panorama-Mosaikbild ist.

8. Ein computerlesbares Speichermedium, auf dem ein oder mehrere Programme gespeichert sind, **dadurch gekennzeichnet, dass** das eine oder die mehreren Computerprogramme von einem oder mehreren Prozessoren ausgeführt werden, um die Schritte des Verfahren zur Anpassung der Helligkeit für die Bildung eines Mosaiks mit mehreren Kameras gemäß einem der Ansprüche 1 bis 7 zu implementieren.

9. Ein tragbares Terminal (100), aufweisend:

   einen oder mehrere Prozessoren (101);
   einen Speicher (102); und
   ein oder mehrere Computerprogramme, die in dem Speicher (102) gespeichert sind und so konfiguriert sind, dass sie von dem einen oder den mehreren Prozessoren (101) ausgeführt werden, **dadurch gekennzeichnet, dass** das eine oder die mehreren Computerprogramme von einem oder mehreren Prozessoren ausgeführt werden, um die Schritte des Verfahren zur Anpassung der Helligkeit für die Bildung eines Mosaiks mit mehreren Kameras nach einem der Ansprüche **1** bis **7** zu implementieren.

**Revendications**

1. Procédé de réglage de la luminosité destiné au mosaïquage de caméras multiples, qui comprend les étapes de : acquisition de six images originales respectivement photographiées par six caméras et extension des six images originales en images de latitude et de longitude pour acquérir six groupes correspondants d'images de régions se chevauchant, lesdits six groupes d'images de régions se chevauchant étant des paires d'images de régions se chevauchant marquées sous la forme sl[i] et rl [i], i = 1 à 6, où sl[i] et rl[i] sont une paire d'images de régions se chevauchant, sl[i] est photographié par la caméra i, lorsque i = 1~5, rl[i] est photographié par la caméra i+1, lorsque i = 6, rl[6] est photographié par la première caméra ;

   **caractérisé en ce que** le procédé comprend en outre les étapes de
   mappage de l'image originale photographiée par chaque caméra avec une fonction de mappage de luminosité respective, et calcul d'une somme des différences de luminosité des six groupes d'images de régions se chevauchant en tant qu'erreur de luminosité totale ;
   réglage de la fonction de mappage de luminosité de chaque caméra respectivement pour minimiser l'erreur de luminosité totale afin d'obtenir une fonction de mappage de luminosité optimale pour chaque caméra ;
   maintien d'une image avec une partie sombre qui est la plus lumineuse dans les images originales inchangée, établissement de la fonction de mappage de luminosité de l'image avec une partie sombre qui est la plus lumineuse, calcul de sa fonction inverse pour fournir une première fonction de réglage, réglage de la fonction de mappage de luminosité optimale pour chaque caméra avec la première fonction de réglage et mappage de toutes les images originales pour le mosaïquage panoramique afin de générer une image mosaïque panoramique sombre, et
   maintien d'une image avec une partie lumineuse qui est la plus sombre dans les images originales inchangée, établissement de la fonction de mappage de luminosité de l'image avec une partie lumineuse qui est la plus sombre, calcul de sa fonction inverse pour fournir une seconde fonction de réglage, réglage de la fonction de mappage de luminosité optimale pour chaque caméra avec la seconde fonction de réglage et mappage de toutes les images originales pour le mosaïquage panoramique afin de générer une image mosaïque panoramique lumineuse ; et
   fusion de l'image de mosaïque panoramique sombre et de l'image de mosaïque panoramique lumineuse pour générer une image de mosaïque panoramique.

2. Procédé de la revendication **1, caractérisé en ce que** la fonction de mappage de luminosité est :

$$f(x) = \begin{cases} kx & x < 128 \\ ax^b + c & x \geq 128 \end{cases} \qquad (1)$$

   dans la formule (1), a, b, c satisfont :

$$f(128) = 128k \qquad (2)$$

$$f'(128) = k \qquad (3)$$

$$f(255) = 255 \qquad (4)$$

dans la formule (2) et la formule (3) ci-dessus, *k* est une valeur initiale, la valeur initiale est définie égale à 1, et *x* est une valeur de pixel, $x \in [0,255]$, de façon à déterminer la fonction de mappage de luminosité complète.

3. Procédé de la revendication **2, caractérisé en ce que** l'étape de calcul d'une somme des différences de luminosité des six groupes d'images de régions se chevauchant en tant qu'erreur de luminosité totale, comprend spécifiquement :

le calcul des histogrammes de luminosité sH[i] et rH[i] de toutes les deux images de régions se chevauchant sI[i] et rI[i] ;
le calcul des histogrammes cumulatifs sS[i] et rS[i] de toutes les deux images de régions se chevauchant ;
l'alignement de sS[i] sur rS[i] pour obtenir la fonction de mappage de luminosité sMap[i] par spécification d'histogramme ; sinon, alignement de rS[i] sur sS[i] pour obtenir la fonction de mappage de luminosité rMap[i] ; et
le calcul d'une somme des différences de luminosité des six groupes d'images de régions se chevauchant en tant qu'erreur de luminosité totale par la formule (5) :

$$r_i = \sum_{v=0}^{255} \left| f_i(v) - f_{i+1}(v_2) \right| \times sH_i(v) + \left| f_i(v_3) - f_{i+1}(v) \right| \times rH_i(v) \qquad (5)$$

où dans la formule (5) : $v_2 = sMap[v]$, $v_3 = rMap[v]$, et une erreur de luminosité totale des six caméras est :

$$r = \sum_{i=1}^{6} r_i$$

.

4. Procédé de la revendication **2, caractérisé en ce qu'**un procédé de calcul de la fonction de mappage de luminosité optimale est :
le réglage de la valeur *k* de la fonction de mappage de luminosité, calcul des valeurs *a, b, c* ; la définition de la valeur *k* des six caméras à initialiser égale à 1, l'optimisation de la valeur *k* de chaque caméra par l'algorithme LM sous $k_1 k_2 k_3 k_4 k_5 k_6 = 1$, et la minimisation de l'erreur de luminosité totale *r*, lorsque *r* est le minimum, les six caméras comportent six valeurs *k*, les valeurs *a, b, c* correspondant à chaque caméra sont calculées selon la valeur de *k* à cet instant, et à cet instant, la fonction de mappage de luminosité pour chaque caméra est la fonction de mappage de luminosité optimale.

5. Procédé de la revendication **4, caractérisé en ce que** l'image mosaïque panoramique sombre est l'image panoramique avec une partie sombre qui est la plus lumineuse, un procédé permettant l'obtention comprenant :

le maintien d'une image avec une partie sombre qui est la plus lumineuse dans les images originales inchangée, l'établissement de la fonction de mappage de luminosité $f_h$ de l'image avec une partie sombre qui est la plus lumineuse, le calcul de sa fonction inverse $f_h{}^{-1}$ de celle-ci, et réglage de la fonction de mappage de luminosité optimale avec la première fonction de réglage ; où la première fonction de réglage est :

$$f_i^{(1)}(x) = f_h^{-1}[f_i(x)] \qquad (6)$$

dans la formule (6), $f_i^{(1)}(x)$ est la fonction de mappage de luminosité réglée de la caméra *i*, et *$f_i(x)$* est la fonction de mappage de luminosité optimale de la caméra *i.*

6. Procédé de la revendication **4, caractérisé en ce que** l'image mosaïque panoramique lumineuse est l'image panoramique avec une partie lumineuse qui est la plus sombre, un procédé permettant l'obtention comprenant :

le maintien d'une image avec une partie lumineuse qui est la plus sombre dans les images originales inchangée, l'établissement de la fonction de mappage de luminosité *$f_l$* de l'image avec une partie lumineuse qui est la plus sombre, le calcul de sa fonction inverse $f_l^{-1}$ de celle-ci, et le réglage de la fonction de mappage de luminosité optimale avec la seconde fonction de réglage ; où la seconde fonction de réglage est :

$$f_i^{(2)}(x) = f_l^{-1}[f_i(x)] \qquad (7)$$

dans la formule (7), $f_i^{(2)}(x)$ est la fonction de mappage de luminosité réglée de la caméra **i**, et **$f_i(x)$** est la fonction de mappage de luminosité optimale de la caméra **i**.

7. Procédé de la revendication **1, caractérisé en ce que** l'étape de fusion de l'image mosaïque panoramique sombre et de l'image mosaïque panoramique lumineuse pour générer l'image mosaïque panoramique de sortie finale, est spécifiquement que :

dans l'image mosaïque panoramique sombre, la définition du poids **W** au niveau du méridien central de l'image originale la plus lumineuse égal à 1, la définition du poids **W** au niveau du méridien central de l'image originale la plus sombre égal à 0, et la réalisation d'une transition linéaire vers d'autres régions ; de façon à générer une carte de poids $W_1$, la soustraction de la valeur de chaque point dans $W_1$ avec 1 pour générer une carte de poids $W_2$; et la génération d'une image mosaïque panoramique par la formule :

$$I = W_1 I_1 + W_2 I_2 \qquad (8)$$

où dans la formule (8), **I** est l'image de mosaïque panoramique finalement générée, **$I_1$** est l'image de mosaïque panoramique sombre, et **$I_2$** is l'image de mosaïque panoramique lumineuse.

8. Support de stockage lisible par ordinateur sur lequel est stocké un ou plusieurs programmes, **caractérisé en ce que** le ou les programmes informatiques sont exécutés par un ou plusieurs processeurs pour mettre en œuvre les étapes du procédé de réglage de luminosité pour le mosaïquage de caméras multiples de l'une quelconque des revendications **1** à **7.**

9. Terminal mobile (100), comprenant :

un ou plusieurs processeurs (101) ;
une mémoire (102) ; et
un ou plusieurs programmes informatiques qui sont stockés dans la mémoire (102) et sont configurés pour être exécutés par le ou les processeurs (101), **caractérisé en ce que** le ou les programmes informatiques sont exécutés par un ou plusieurs processeurs pour mettre en œuvre les étapes du procédé de réglage de luminosité pour le mosaïquage de caméras multiples de l'une quelconque des revendications **1** à **7.**

S101

Acquire six original images respectively photographed by six cameras and expanding same into latitude and longitude images to acquire corresponding six groups of overlapping region images

S102

Map the original image photographed by each camera with a brightness mapping function, and calculate the total brightness error of the brightness of the six groups of overlapping region images

S103

Adjust the brightness mapping function of each camera respectively to minimize the total brightness error to obtain an optimal brightness mapping function

S104

Keep an image with a dark part being the brightest in the original images unchanged, adjust the optimal brightness mapping function and map all the original images for panoramic mosaicing to generate a dark panoramic mosaic image, and keep an image with a bright part being the darkest in the original images unchanged, adjust the optimal brightness mapping function and map all the original images for panoramic mosaicing to generate a bright panoramic mosaic image

S105

Fuse the dark panoramic mosaic image and the bright panoramic mosaic image to generate a panoramic mosaic image

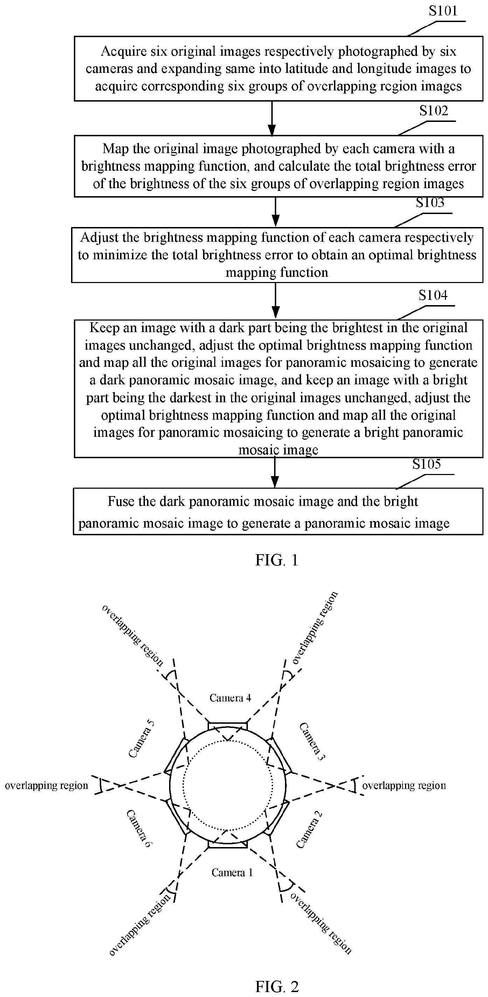

FIG. 1

FIG. 2

Camera 1

Camera 2

Camera 3

Camera 4

Camera 5

Camera 6

Fisheye lens          overlapping region images

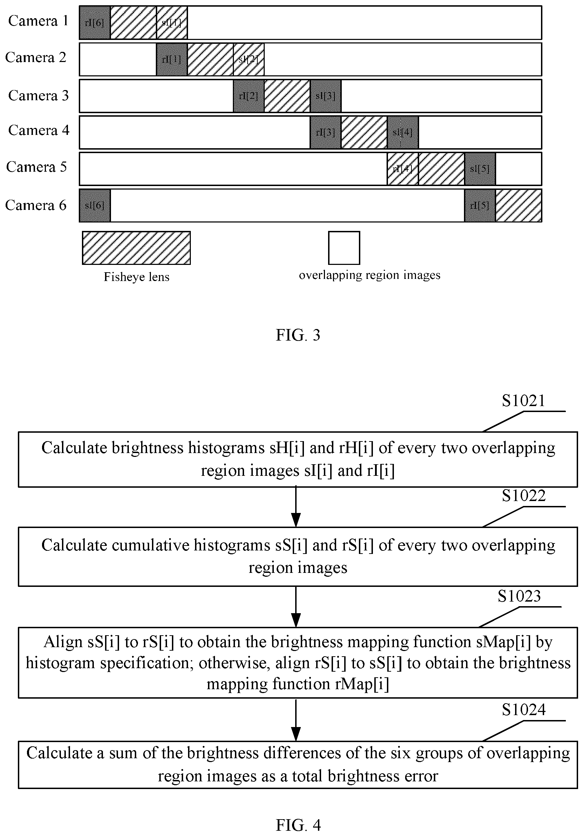

FIG. 3

S1021

Calculate brightness histograms sH[i] and rH[i] of every two overlapping region images sI[i] and rI[i]

S1022

Calculate cumulative histograms sS[i] and rS[i] of every two overlapping region images

S1023

Align sS[i] to rS[i] to obtain the brightness mapping function sMap[i] by histogram specification; otherwise, align rS[i] to sS[i] to obtain the brightness mapping function rMap[i]

S1024

Calculate a sum of the brightness differences of the six groups of overlapping region images as a total brightness error

FIG. 4

W=1         W=0         W=1

FIG. 5

100

**Portable terminal**

101

Processor

102

Memory

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102542548 B
- US 2004228544 A1
- US 2018082454 A1